# EUROPÄISCHE PATENTANMELDUNG

(11) **EP 2 463 734 A1**
(43) Veröffentlichungstag der Anmeldung: **13.06.2012**
(21) Anmeldenummer: 10193927.0
(22) Anmeldetag: 07.12.2010
(51) Int. Cl.: G05B 9/02, G05B 19/05

(54) **Automatisierungsgerät und Verfahren zur Bewertung einer Diagnosemeldung aus einer Peripheriebaugruppe.**

(71) Anmelder: SIEMENS AKTIENGESELLSCHAFT, 80333 München (DE)
(72) Erfinder: Fuchs, Heiner, 91056 Erlangen (DE); Trapp, Lothar, 90537 Feucht (DE)

(57) **Zusammenfassung**

Die Erfindung betrifft ein Automatisierungsgerät (1) mit
- einer Prozessoreinheit (7), welche ausgestaltet ist ein Anwenderprogramm (2) zu laden, mit welchem ein industrieller Prozess gesteuert wird,
ausgestaltet zur Kommunikation mit dem industriellen Prozess über eine Peripheriebaugruppe (6), wobei mittels der Kommunikation
- ein Prozesswert (11,21)
- einer Prozessvariablen (10,20)
von dem Anwenderprogramm (2) abfragbar ist,
wobei
ein Mittel (30), welches ausgestaltet ist,
- einen Statuswert (12,22) auf der Grundlage
- einer Diagnosemeldung (40) der Peripheriebaugruppe (6) zu generieren, wobei der Statuswert (12,22) ein Qualitätskennzeichen des Prozesswertes (11,21) ist.

## Beschreibung

Die Erfindung betrifft ein Automatisierungsgerät mit einer Prozessoreinheit, welche ausgestaltet ist ein Anwenderprogramm zu laden, mit welchem ein industrieller Prozess gesteuert wird, ausgestaltet zur Kommunikation mit dem industriellen Prozess über eine Peripheriebaugruppe, wobei mittels der Kommunikation ein Prozesswert einer Prozessvariablen von dem Anwenderprogramm abfragbar ist.

Des Weiteren betrifft die Erfindung ein Verfahren zum Betrieb eines Automatisierungsgerätes, wobei in einer Prozessoreinheit ein Anwenderprogramm abläuft, mit welchem ein industrieller Prozess gesteuert wird, von dem Anwenderprogramm ein Prozesswert und ein Statuswert einer Prozessvariablen abgefragt wird, wobei der Prozesswert über eine Kommunikation mit dem industriellen Prozess mittels einer Peripheriebaugruppe ermittelt wird.

Nach der DIN 19233 heißt Automatisieren, Mittel einzusetzen, damit ein Vorgang automatisch abläuft. Bei einer industriellen Anlage bedeutet dies, sie mit Automatisierungsgeräten so auszurüsten, dass ein industrieller Prozess automatisch abgearbeitet werden kann.

Zum Automatisieren laufen in den Automatisierungsgeräten, insbesondere in speicherprogrammierbaren Steuerungen, Anwenderprogramme ab, welche ein Messen, Steuern, Regeln, Überwachen und Protokollieren, Führen und Leiten, Bedienen und Beobachten usw. eines industriellen Prozesses ermöglichen. Dabei wird üblicherweise eine Prozessgröße oder eine Vorgangsgröße in einer Prozessvariablen abgebildet, welche in dem Anwenderprogramm ausgewertet wird. Eine SPS als Automatisierungsgerät hat im einfachsten Fall Eingänge, Ausgänge, ein Betriebssystem und eine Schnittstelle, über die das Anwenderprogramm geladen werden kann. Das Anwenderprogramm legt beispielsweise fest, wie die Ausgänge in Abhängigkeit von den Eingängen geschaltet werden sollen. Eine Anbindung der SPS an eine Maschine bzw. an eine Anlage erfolgt mit Sensoren und Aktoren. Die Sensoren sind an die Eingänge der SPS geschaltet und vermittelt der SPS das Geschehen in der Maschine oder der Anlage. Üblicherweise arbeitet eine SPS zyklusorientiert oder ereignisorientiert. Beispielsweise wird nach Feststellung einer Betriebsbereitschaft aller angeschlossenen Baugruppen ein Prozessabbild aller Eingänge aktualisiert. Das Anwenderprogramm wertet dieses Prozessabbild aus und kann dementsprechend ein Prozessabbild der Ausgänge erzeugen.

Nachteilig an den bisher bekannten Automatisierungsgeräten ist es, dass nach dem Erzeugen des Prozessabbildes für die Eingänge keine Informationen über die Qualität eines Eingangssignals bzw. eines Ausgangssignals vorliegt. Das bedeutet, bei Automatisierungsgeräten, könnte sich ein falsches Eingangssignal einschleichen und damit wäre eine zuverlässige Steuerung des industriellen Prozesses nicht mehr möglich.

Es ist daher Aufgabe der Erfindung ein Automatisierungsgerät bereitzustellen, welche die Zuverlässigkeit und die Sicherheit bei der Steuerung eines industriellen Prozesses erhöht.

Bei einem Automatisierungsgerät mit einer Prozessoreinheit, welche ausgestaltet ist, ein Anwenderprogramm zu laden, mit welchen ein industrieller Prozess gesteuert wird, ausgestaltet zur Kommunikation mit dem industriellen Prozess über eine Peripheriebaugruppe, wobei mittels der Kommunikation ein Prozesswert einer Prozessvariablen von dem Anwenderprogramm abfragbar ist, wird die Aufgabe dadurch gelöst, dass ein Mittel vorhanden ist, welches ausgestaltet ist, einen Statuswert auf der Grundlage einer Diagnosemeldung der Peripheriebaugruppe zu generieren, wobei der Statuswert ein Qualitätskennzeichnen des Prozesswertes ist. Vorzugsweise wird der Statuswert auch als eine Qualitätsinformation (QI) bezeichnet. Es wird also die zuvor fehlende QI mit Hilfe der Mittel durch das Automatisierungsgerät nachgebildet, und dadurch kann eine qualitative Aussage über, beispielsweise die Gültigkeit oder Ungültigkeit, eines Prozesswertes bzw. eines Eingangssignals getroffen werden. Bei Peripheriebaugruppen, welche zusammen mit einem ihrer Ausgänge oder Eingänge bereits eine QI zu den Aus- oder Eingangssignalen mitliefern, könnten die QI-Informationen an dem Mittel vorbeigeführt werden, aber für Baugruppen, welche dieses nicht haben, wird durch das Mittel im Automatisierungsgerät, die QI erfolgreich nachgebildet.

In einer weiteren Ausgestaltung des Automatisierungsgerätes, weist dieses ein Prozessabbild zum Abbilden des Prozesswertes und des Statuswertes der Prozessvariablen auf. Da die Automatisierungsgeräte in der Regel zyklusorientiert arbeiten, werden für die Dauer, in welcher das Automatisierungsgerät die Prozessvariablen nicht aktuell einliest, diese in dem Prozessabbild vorgehalten.

In einer weiteren vorteilhaften Ausgestaltung ist das Mittel ausgestaltet den Statuswert zu aktualisieren, wenn sich die Diagnosemeldung ändert bzw. wenn eine neue Diagnosemeldung auftritt.

Vorzugsweise weist dabei das Mittel eine Auswerteeinheit auf, welche ausgestaltet ist, unterschiedliche Arten von Diagnosemeldungen zu interpretieren. Für den Fall, dass an das Automatisierungsgerät unterschiedliche Peripheriebaugruppen, wie Ein-/Ausgabebaugruppen von unterschiedlichen Herstellern angeschlossen werden, ist es von großem Vorteil, wenn das Mittel mit seiner Auswerteeinheit die unterschiedlichen Arten von Diagnosemeldungen, welche die Peripheriebaugruppen absetzen, automatisch erkennt und aufgrund der Diagnosemeldungen die für die Prozesswerte entsprechenden Qualitätskennzeichen bzw. Statuswerte zu erzeugen.

Vorzugsweise weist dazu die Auswerteeinheit eine Typ-Liste auf, mit welcher typspezifisch der Statuswert einer Prozessvariablen eines bestimmten Typs einer Peripheriebaugruppe ermittelbar ist. Die Information der Diagnosemeldung kann dabei über eine Interpretationsvorschrift erfolgen, welche zum Einen für bekannte Typen bereits in einer Liste in der Firmware des Automatisierungsgerätes implementiert ist oder zum Anderen bei unbekannten Typen über eine vom Hersteller der Baugruppen bereitgestellten, nachladbaren Interpretationsvorschrift erfolgen.

In einer weiteren Ausgestaltung ist das Mittel dazu ausgestaltet, den Statuswert als zusätzliche binäre Information zu einem Eingangssignal der Peripheriebaugruppe bereitzustellen.

Auch für die Ausgangssignale ist es vorteilhaft, wenn das Mittel dazu ausgestaltet ist, den Statuswert als zusätzliche binäre Information zu einem Ausgangssignal der Peripheriebaugruppe bereitzustellen.

Vorzugsweise werden Diagnosemeldungen aus folgender Gruppe ausgewertet: Drahtbruchfehler, Kurzschlussfehler, Stationsfehler, Wackelkontaktfehler, Ziehen- oder Steckenereignisse einer Baugruppe. Auch können Alarme für Systemdiagnosen, Kanalfehler, Peripheriezugrifffehler (PZF), Input-Output-Provider State usw. Bestandteil der Diagnosemeldung sein.

Weiterhin wird die eingangs genannte Aufgabe durch ein Verfahren zum Betrieb eines Automatisierungsgerätes gelöst. Dabei läuft ein Anwenderprogramm in einer Prozessoreinheit des Automatisierungsgerätes ab, ein industrieller Prozess wird dadurch gesteuert, von dem Anwenderprogramm wird ein Prozesswert und ein Statuswert einer Prozessvariablen abgefragt, wobei der Prozesswert über eine Kommunikation mit einem industriellen Prozess mittels einer Peripheriebaugruppe ermittelt wird, dabei wird einem Mittel eine Diagnosemeldung der Peripheriebaugruppe zugeführt, der Statuswert wird auf der Grundlage der Diagnosemeldung mit dem Mittel generiert, dadurch wird ein Qualitätskennzeichen des Prozesswertes für das Anwenderprogramm bereitgestellt.

In einem weiteren Verfahrensschritt wird der Prozesswert und der Statuswert in einem Prozessabbild eingetragen.

Da man auftretende Diagnosemeldungen nicht vorhersehen kann, wird über das Mittel der Statuswert aktualisiert, wenn sich die Diagnosemeldung ändert bzw. wenn eine neue Diagnosemeldung auftritt.

In einer weiteren vorteilhaften Anwendung des Verfahrens werden über die Auswerteeinheit unterschiedliche Arten von Diagnosemeldungen ausgewertet.

Um eine Einsatzflexibilität des Automatisierungsgerätes zu erhöhen, wird in der Auswerteeinheit eine Typ-Liste durchsucht und in Abhängigkeit von einem Typ der Peripheriebaugruppe wird der Statuswert gesetzt. Mit diesem Verfahren können an dem Automatisierungsgerät unterschiedliche Peripheriebaugruppen unterschiedlichster Hersteller betrieben werden.

In den meisten Fällen ist es ausreichend als Statuswert eine Qualitätsinformation (QI) zu liefern, dazu wird der Statuswert als zusätzliche binäre Information zu einem Eingangssignal in einem ersten Prozessabbild bereitgestellt. Jedem Kanal, beispielsweise einer Ein-/Ausgabebaugruppe, könnte somit ein QI zugeordnet werden. Dieses QI besteht dann nur aus einem Bit, das die Zustände "1" (gut) und "O" (schlecht) absetzt. Vorzugsweise wird die zusätzliche binäre Information für den Statuswert auch zu einem Ausgangssignal in einem zweiten Prozessabbild bereitgestellt.

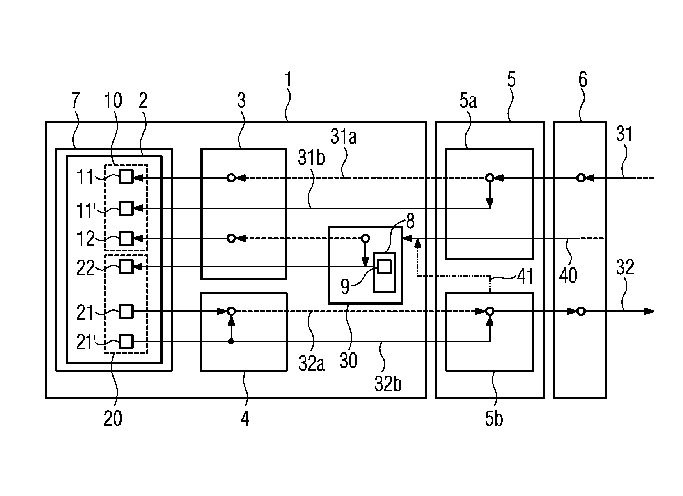

Die Zeichnung zeigt ein Ausgestaltungsbeispiel mit weiteren Merkmalen.

Gemäß der Figur ist ein Automatisierungsgerät 1 mit einer Prozessoreinheit 7 dargestellt. Das Automatisierungsgerät 1 ist an ein Schnittstellenmodul 5 angeschlossen, wobei das Schnittstellenmodul 5 in einen Eingangsbereich 5a und einem Ausgangsbereich 5b unterteilt ist. Eine Peripheriebaugruppe 6, ausgestaltet als eine Ein-/Ausgabebaugruppe, weist einen Anschluss für ein Eingangssignal 31 und einen Anschluss für ein Ausgangssignal 32 auf. Das Eingangssignal 31 wird mittels der Peripheriebaugruppe 6 an das Schnittstellenmodul 5 geführt, wobei über den Eingangsbereich 5a das Eingangssignal 31 in das Automatisierungsgerät 1 geleitet wird. Für die Einleitung von Eingangssignalen weist das Automatisierungsgerät 1 einen ersten Eingangsweg 31a und einen zweiten Eingangsweg 31b auf.

Ähnlich wie für die Eingangssignale weist das Automatisierungsgerät 1 einen ersten Ausgangsweg 32a und einen zweiten Ausgangsweg 32b für die Ausgangssignale auf.

In die Prozessoreinheit 7 ist ein Anwenderprogramm 2 geladen. In dem Anwenderprogramm 2 ist eine erste Prozessvariable 10 und eine zweite Prozessvariable 20 definiert. Die erste Prozessvariable 10 wird als eine Eingangsvariable mit einem ersten Prozesswert 11 und einem ersten Statuswert 12 in dem Anwenderprogramm 2 geführt.

Auch für eine Ausgangsvariable ist in dem Anwenderprogramm 2 eine zweite Prozessvariable 20 definiert, diese weist wiederum einen zweiten Prozesswert 21 und einem zweiten Statuswert 22 auf.

Für eine Zuordnung von Qualitätskennzeichen zu den Prozesswerten 11,21 ist in dem Automatisierungsgerät 1 ein Mittel 30 angeordnet. Das Mittel 30 ist ausgestaltet, einen ersten Statuswert 12 und einem zweiten Statuswert 22 auf der Grundlage einer Diagnosemeldung 40 der Peripheriebaugruppe 6 zu generieren.

Beispielsweise könnte eine Diagnosemeldung 40 eine Meldung von der Peripheriebaugruppe 6 bezüglich eines Kurzschlussfehlers sein. Diese Kurzschlussfehlermeldung wird nun von der Peripheriebaugruppe 6 über das Schnittstellenmodul 5 an das Automatisierungssystem 1 geleitet. Das Mittel 30 wertet dabei die Kurzschlussfehlermeldung aus und stellt bezogen auf die erste Prozessvariable 10 den ersten Statuswert 12 bereit. Da die Peripheriebaugruppe 6 eine Kurzschlussfehlermeldung gemeldet hat, ist die Wahrscheinlichkeit hoch, dass der zu der ersten Prozessvariable 10 gehörige erste Prozesswert 11 nicht gültig ist. Das bedeutet für diesen unsicheren Fall, wird der erste Statuswert 12 als eine Quality-Information (QI) betrachtet und als ein Binärwert auf "0" gesetzt. In diesem Fall würde der Zustand des ersten Statuswertes 12 "1" für gut und "0" für schlecht stehen.

Eine in den meisten Fällen vorhandene Systemdiagnose des Automatisierungsgerätes 1 wurde somit erfolgreich um eine Generierung einer Qualitäts-Information von Signalen, welche über eine Peripheriebaugruppe 6 an das Automatisierungsgerät 1 geführt werden, erweitert. Mit dem Mittel 30 erhält ein mit der Programmierung des Automatisierungsgerätes 1 betrauter Anlagentechniken eine Anwendungsschnittstelle für eine Vielzahl von unterschiedlichen Baugruppen. Dazu weist das Mittel 30 eine Auswerteeinheit 8 und eine Typ-Liste 9 auf. Mit der Auswerteeinheit 8 können unterschiedliche Arten von Diagnosemeldungen interpretiert werden und dementsprechend die Statuswerte für die zugehörigen Prozessvariablen gesetzt werden. Mit der Kombination Auswerteeinheit 8 und Typ-Listen 9 ist es möglich, typspezifisch einen Statuswert einer Prozessvariablen eines bestimmten Typs an der Peripheriebaugruppe 6 zu ermitteln.

Für die erste Prozessvariable 10 soll, ausgehend von der Peripheriebaugruppe 6, der Weg verfolgt werden, dabei ist beispielsweise für das Eingangssignal 31 ein "Tür auf" "Tür zu"-Sensor angeschlossen. Über den Anschluss für das Eingangssignal 31 wird das Eingangssignal 31 in der Peripheriebaugruppe 6 erfasst und an den Eingangsbereich 5a des Schnittstellenmoduls 5 weitergeleitet. Der Wert des Eingangssignals 31 liegt nun beispielsweise in binärer Form in dem Eingangsbereich 5a vor. Von hier aus kann der Wert des Eingangssignals 31 über den ersten Eingangsweg 31a oder den zweiten Eingangsweg 31b in das Anwenderprogramm 2 geführt werden. Der erste Eingangsweg 31a unterscheidet sich von dem zweiten Eingangsweg 31b dadurch, dass der zweite Eingangsweg 31b ein Direktzugriff auf den Wert des Eingangssignals 31 ist. Der erste Eingangsweg 31a führt nämlich über ein erstes Prozessabbild 3. In diesem ersten Prozessabbild 3 wird der Wert des Eingangssignals 31 zwischengespeichert. Bei zyklisch arbeitenden Automatisierungsgeräten hat sich eine Zwischenspeicherung in einem Prozessabbild als vorteilhaft erwiesen.

Der Wert des Eingangssignals 31 wird in dem Anwenderprogramm 2 der ersten Prozessvariable 10 zugeordnet, wobei der erste Prozesswert 11 als Platzhalter für den Wert des Eingangssignals 31 steht.

Um nun aber zu einem Qualitätskennzeichen des ersten Prozesswertes 11 zu gelangen, wertet das Mittel 30 zyklisch mögliche Diagnosemeldungen 40 von der Peripheriebaugruppe 6 aus. Sollte beispielsweise eine Diagnosemeldung 40 "Kanal-Fehler" für den Kanal des Eingangssignals 31 aufgetreten sein, so generiert das Mittel 30 auf Grundlage dieser "Kanal-Fehlermeldung" den entsprechenden Statuswert für den ersten Prozesswert 11.

Für das Bereitstellen eines Ausgangssignals 32 an der Peripheriebaugruppe 6 ist im Anwenderprogramm 2 die zweite Prozessvariable 20 definiert, welche sich untergliedert, in einen zweiten Prozesswert 21 und einen zweiten Statuswert 22. Wird der zweite Prozesswert 21 über den ersten Ausgangsweg 32a zur Peripheriebaugruppe 6 geschrieben, so kann sein zweiter Prozesswert 21 in einem zweiten Prozessabbild 4 zwischengespeichert werden, wenn das dazugehörige Qualitätskennzeichen, nämlich der zweite Statuswert 22 in Ordnung ist. Wichtig dabei ist, dass das Anwenderprogramm 2 über den zweiten Statuswert 22 ermitteln kann, ob der zweite Prozesswert 21 ausgegeben werden konnte. Diesen zweiten Statuswert 22 erhält das Anwenderprogramm 2 ebenfalls über das Mittel 30. Eine Rückmeldung 41 zu dem Ausgangssignal 32 ist als eine gestrichelte Linie mit Doppelpunkten dargestellt. Diese Linie symbolisiert u.a. eine mögliche Fehlermeldung, welche von dem Ausgangsbereich 5b generiert wird. Beispielsweise ein Kurzschlussfehler im Ausgangsbereich 5b. Das Mittel 30 erfasst diese Meldung und setzt den zweiten Statuswert 22 auf "0", welches bedeutet, dass das Signal als ungültig erklärt wird. Auch symbolisiert diese Linie eine Diagnosemeldung, die nicht von der Peripheriebaugruppe kommen kann, da diese z.B. ausgefallen ist und der Ausfall über eine Systemdiagnose im Schnittstellenmodul 5 festgestellt wurde.

Durch das Generieren einer Qualitäts-Information über das Mittel 30, welches üblicherweise in einem Betriebssystem des Automatisierungsgerät 1 implementiert ist, wird für den Anwender eines solchen Automatisierungsgerätes ein identisches User Interface für alle Typen von Peripheriebaugruppe 6 bereitgestellt.

## Patentansprüche

1. Automatisierungsgerät (1) mit
- einer Prozessoreinheit (7), welche ausgestaltet ist ein Anwenderprogramm (2) zu laden, mit welchem ein industrieller Prozess gesteuert wird,
ausgestaltet zur Kommunikation mit dem industriellen Prozess über eine Peripheriebaugruppe (6), wobei mittels der Kommunikation
- ein Prozesswert (11,21)
- einer Prozessvariablen (10,20)
von dem Anwenderprogramm (2) abfragbar ist,
**gekennzeichnet durch**
ein Mittel (30), welches ausgestaltet ist,
- einen Statuswert (12,22) auf der Grundlage
- einer Diagnosemeldung (40) der Peripheriebaugruppe (6) zu generieren, wobei der Statuswert (12,22) ein Qualitätskennzeichen des Prozesswertes (11,21) ist.

2. Automatisierungsgerät (1) nach Anspruch 1, aufweisend
- ein Prozessabbild (3) zum Abbilden des Prozesswertes (11,21) und des Statuswertes (12,22) der Prozessvariablen (10,20).

3. Automatisierungsgerät (1) nach Anspruch 1 oder 2, wobei das Mittel (30) ausgestaltet ist den Statuswert (12,22) zu aktualisieren, wenn sich die Diagnosemeldung (40) ändert.

4. Automatisierungsgerät (1) nach einem der Ansprüche 1 bis 3, wobei das Mittel (30) eine Auswerteeinheit (8) aufweist, welche ausgestaltet ist unterschiedliche Arten von Diagnosemeldungen (40) zu interpretieren.

5. Automatisierungsgerät (1) nach Anspruch 4, wobei die Auswerteeinheit (8) eine Typ-Liste (9) aufweist, mit welcher typspezifisch der Statuswert (12,22) einer Prozessvariablen (10,20) eines bestimmten Typs einer Peripheriebaugruppe (6) ermittelbar ist.

6. Automatisierungsgerät (1) nach einem der Ansprüche 1 bis 5, wobei das Mittel (30) ausgestaltet ist den Statuswert (12,22) als zusätzliche binäre Informationen zu einem Eingangssignal (31) der Peripheriebaugruppe (6) bereitzustellen

7. Automatisierungsgerät (1) nach einem der Ansprüche 1 bis 6, wobei das Mittel (30) ausgestaltet ist den Statuswert (12,22) als zusätzliche binäre Informationen zu einem Ausgangssignal (32) der Peripheriebaugruppe (6) bereitzustellen.

8. Automatisierungsgerät (1) nach einem der Ansprüche 1 bis 7, wobei Diagnosemeldungen (40) aus folgender Gruppe auswertbar sind:
- Drahtbruchfehler
- Kurzschlussfehler,
- Stationsfehler,
- Wackelkontaktfehler,
- Ziehen- oder Steckenereignis einer Baugruppe.

9. Verfahren zum Betrieb eines Automatisierungsgeräts (1), wobei in einer Prozessoreinheit (7) ein Anwenderprogramm (2) abläuft, mit welchem ein industrieller Prozess gesteuert wird, von dem Anwenderprogramm (2) ein Prozesswert (11,21) und ein Statuswert (12,22) einer Prozessvariablen (10,20) abgefragt wird, wobei der Prozesswert (11,21) über eine Kommunikation mit dem industriellen Prozess mittels einer Peripheriebaugruppe (6) ermittelt wird,
**dadurch gekennzeichnet, dass** einem Mittel (30), eine Diagnosemeldung (40)der Peripheriebaugruppe (6) zugeführt wird, und der Statuswert (12,22) auf der Grundlage der Diagnosemeldung (40) mit dem Mittel (30) generiert wird, wobei dadurch ein Qualitätskennzeichen des Prozesswertes (11,21) für das Anwenderprogramm (2) bereitgestellt wird.

10. Verfahren nach Anspruch 9, wobei der Prozesswert (11,21) und der Statuswert (12,22) in ein Prozessabbild (3) eingetragen werden.

11. Verfahren nach Anspruch 9 oder 10, wobei über das Mittel (4) der Statuswert (12,22) aktualisiert wird, wenn sich die Diagnosemeldung (40,41) ändert.

12. Verfahren nach einem der Ansprüche 9 bis 11, wobei über eine Auswerteeinheit (8) unterschiedliche Arten von Diagnosemeldungen (40,41) interpretiert werden.

13. Verfahren nach einem der Ansprüche 9 bis 12, wobei in Auswerteeinheit (8) eine Typ-Liste (9) durchsucht wird und in Abhängigkeit von einem Typ der Peripheriebaugruppe (6) der Statuswert (12,22) gesetzt wird.

14. Verfahren nach einem der Ansprüche 9 bis 13, wobei der Statuswert (12,22) als zusätzliche binäre Informationen zu einem Eingangssignal in einem ersten Prozessabbild (3) bereitgestellt wird.

15. Verfahren nach einem der Ansprüche 9 bis 14, wobei der Statuswert (12,22) als zusätzliche binäre Informationen zu einem Ausgangssignal (32) in einem zweiten Prozessabbild (3) bereitgestellt wird.
